# FASCICULE DE BREVET EUROPEEN

(11) **EP 2 565 849 B1**
(45) Date de publication et mention de la délivrance du brevet: **04.10.2017**
(21) Numéro de dépôt: 12180991.7
(22) Date de dépôt: 20.08.2012
(51) Int. Cl.: G07B 11/00, E05B 17/18, E05B 63/14, E05B 17/14, B60R 11/00

(54) **Fixation d'un valideur de titres de transport**
Befestigung eines Fahrscheinentwerters
Attachment of a transport ticket validator

(30) Priorité: 29.08.2011 FR 1157616
(43) Date de publication de la demande: 06.03.2013
(73) Titulaire: Affiliated Computer Services Solutions France, 07500 Guilherand Granges (FR)
(72) Inventeur: Le Bidan, Guillaume, 07500 Guilherand Granges (FR); Froment, Marion, 07500 Guilherand Granges (FR)
(74) Mandataire: de Beaumont, Michel

(56) Documents cités:
- WO-A1-96/38818
- WO-A1-2008/009875

## Description

### Domaine de l'invention

La présente invention concerne de façon générale les dispositifs de validation de titres de transport. L'invention concerne plus particulièrement la fixation d'un dispositif de validation (valideur) de titres de transport dans un véhicule de transport public, une gare, etc.

### Exposé de l'art antérieur

Des valideurs pour titres de transport sont présents dans les gares, les stations de métro, de bus, de tramways etc., et également dans les véhicules de transport eux-mêmes. Ces valideurs permettent aux usagers de présenter un titre de transport (désormais le plus souvent un titre porté par un élément susceptible de communiquer sans contact - en champ proche - avec le valideur), que ce soit à des fins de comptage (usagers possédant un abonnement), pour débiter un crédit prépayé de titre de transport, ou une carte de paiement. Les valideurs sont généralement fixés de façon amovible à des fins de maintenance.

Il est nécessaire de décharger périodiquement les informations contenues dans le valideur pour les exploiter dans un système central. Dans le cas des gares ou des stations, ce problème peut être résolu par une communication permanente avec le serveur (généralement filaire). Toutefois, dans le cas de valideurs présents dans les véhicules, il est nécessaire de pouvoir lire les informations contenues dans le valideur, par exemple régulièrement pour être en mesure de débiter l'usager du ou des parcours effectués. On prévoit alors généralement un mécanisme de communication avec ou sans contact entre le valideur et un lecteur. Une liaison filaire est souvent préférée pour des questions de débit.

Ce besoin de connexion engendre un risque de sécurité vis-à-vis des informations contenues dans le lecteur qui sont alors susceptibles d'être piratées. L'accès à un connecteur ou à une interface de communication sans contact par un lecteur pirate peut être préjudiciable au fonctionnement du système.

Le document N° 96/38818 décrit un boîtier pour imprimante de tickets de transport destiné à être fixé à un support.

Le document N° 2008/009875 décrit un système de fixation d'un appareil électrique sur un support.

### Résumé

Un objet d'un mode de réalisation de la présente invention est de proposer un système de fixation pour valideur de titres de transport qui pallie tout ou partie des inconvénients des systèmes usuels.

Un autre objet d'un mode de réalisation de la présente invention est de proposer une solution améliorant la sécurité des valideurs contre un piratage des informations qu'ils contiennent.

Un autre objet d'un mode de réalisation de la présente invention est de proposer une solution compatible avec un démontage du valideur à des fins de maintenance.

Un autre objet d'un mode de réalisation de la présente invention est de proposer une solution simple et facile d'utilisation.

Pour atteindre tout ou partie de ces objets ainsi que d'autres, on prévoit un mécanisme de fixation amovible d'un valideur de titres de transport sur un support, comportant une serrure à trois positions parmi lesquelles :
une première position dans laquelle le valideur est mécaniquement verrouillé sur le support et dans laquelle un accès à des données contenues dans le valideur est également verrouillé ;
une deuxième position autorisant le décrochage du valideur du support ; et
une troisième position dans laquelle le valideur est mécaniquement verrouillé sur le support et dans laquelle l'accès auxdites données est déverrouillé.

Selon un mode de réalisation de la présente invention, ledit accès aux données est une prise, ladite serrure actionnant un volet d'obturation de cette prise.

Selon un mode de réalisation de la présente invention, dans ladite troisième position, ledit volet obture partiellement la prise.

Selon un mode de réalisation de la présente invention, la serrure commande des pattes saillantes du support et adaptées à coopérer avec des lumières ménagées dans un fond du valideur.

On prévoit également un système d'accrochage amovible d'un valideur de titres de transport sur un support, comportant un mécanisme de verrouillage.

Selon un mode de réalisation de la présente invention, un fond du support est équipé d'au moins un connecteur électrique adapté à coopérer avec un connecteur correspondant d'un fond du valideur pour reporter des signaux électriques vers ledit accès.

Selon un mode de réalisation de la présente invention, le support définit des moyens d'accrochage propre à coopérer avec le valideur.

Selon un mode de réalisation de la présente invention, le support comporte :
en partie supérieure, un bec, adapté à coopérer avec une lumière ménagée dans le fond du valideur, le valideur étant accroché par sa partie supérieure au support à la manière d'une patère ; et
des joues latérales pour guider le positionnement latéral du valideur.

Selon un mode de réalisation de la présente invention, lesdits moyens comportent des éléments saillants du support, aptes à coopérer avec des lumières ou orifices ménagés dans le valideur.

On prévoit un support pour valideur de titres de transports, conforme à un tel système.

### Brève description des dessins

Ces objets, caractéristiques et avantages, ainsi que d'autres seront exposés en détail dans la description suivante de modes de réalisation particuliers faite à titre non-limitatif en relation avec les figures jointes parmi lesquelles :
les figures 1A et 1B sont deux vues schématiques de dispositifs de validation de titres de transport du type auquel s'applique à titre d'exemple les modes de réalisation qui vont être décrits ;
la figure 2 est une représentation schématique d'un système d'interrogation du valideur de la figure 1B ;
les figures 3A et 3B sont des vues schématiques, en perspective de dessous, d'un mode de réalisation d'un valideur et de son support ;
les figures 4A, 4B, 4C et 4D sont des vues latérales en coupe illustrant un mode d'accrochage d'un valideur sur son support ;
les figures 5A, 5B et 5C sont des vues de dessous du support de valideur illustrant trois positions d'un mode de réalisation d'un mécanisme de verrouillage ;
la figure 6 est une vue en élévation d'un mode de réalisation d'un socle ou support ; et
la figure 7 est une vue en élévation arrière d'un valideur adapté au socle de la figure 6.

### Description détaillée

De mêmes éléments ont été désignés par de mêmes références aux différentes figures. Par souci de clarté, seuls les éléments utiles à la compréhension des modes de réalisation ont été représentés et seront décrits. En particulier, les protocoles de communication entre le valideur et son lecteur ainsi qu'entre le valideur et les titres de transport n'ont pas été détaillés, l'invention étant compatible avec les protocoles usuels. De plus, seuls les éléments du valideur et du support participant à la fixation et au verrouillage seront décrits. La forme et la constitution des autres éléments peuvent être dictées par des considérations esthétiques et fonctionnelles autres que les besoins de fixation et de verrouillage. Les qualificatifs "vertical", horizontal", "supérieur", "inférieur" "avant", "arrière", etc. font arbitrairement référence à l'orientation du système dans une position normale d'utilisation.

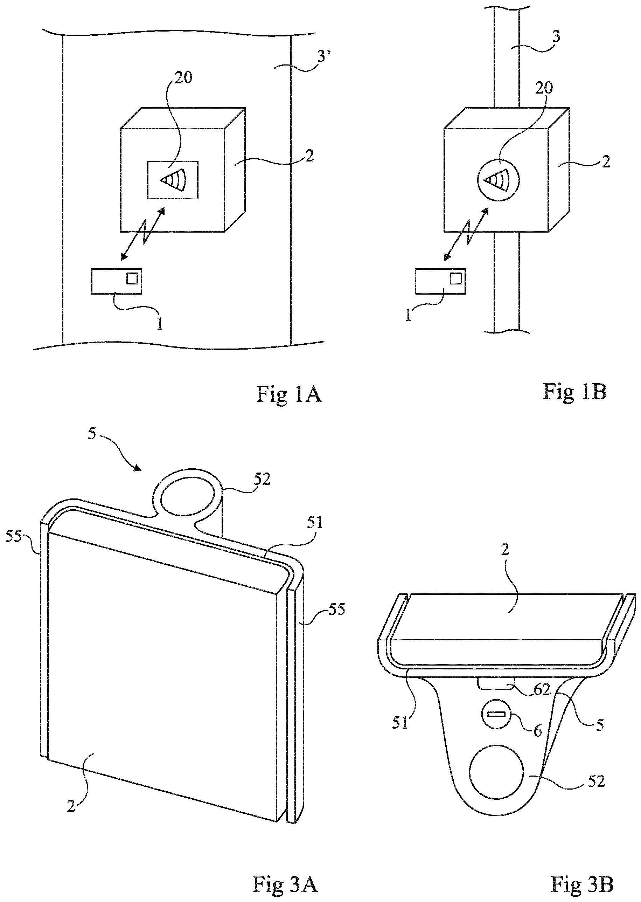

Les figures 1A et 1B sont des représentations schématiques de systèmes de validation de titre de transport.

Un usager, muni d'un titre d'un transport 1, présente son titre à faible distance d'un valideur 2 pourvu d'une antenne 20 de communication en champ proche. Le plus souvent, la communication entre le titre de transport et le valideur est une communication sans contact, typiquement une communication en champ proche. On peut également prévoir des valideurs pourvus en plus ou alternativement de fentes d'introduction de titres de transport magnétiques ou à puce. Le rôle du valideur 2 est de contrôler la validité du titre de transport qu'il s'agisse d'un abonnement, d'une carte contenant des titres prépayés, ou d'une carte bancaire pour l'achat d'un titre unique. Les informations contenues dans le valideur 2 sont transmises, par exemple périodiquement, à un système central chargé de comptabiliser les titres consommés et le cas échéant, de provoquer les débits bancaires sur le compte de l'usager.

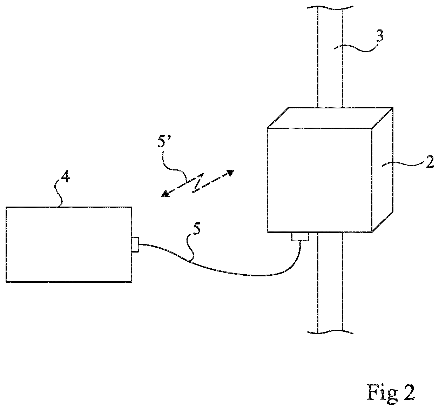

Le valideur 2 est fixé par exemple à une paroi 3' (figure 1A) ou à un poteau 3 (figure 2B) d'une gare ou d'un véhicule. D'autres structures de réception d'un valideur peuvent exister et les modes de réalisation qui vont être décrits sont compatibles avec ces différentes structures.

La figure 2 est une représentation schématique illustrant un mode de transfert de données contenues dans des circuits électroniques du valideur 2.

Un lecteur 4, par exemple un ordinateur portable, un dispositif électronique dédié, etc. est connecté au valideur 2 pour extraire des informations qu'il contient et, le cas échéant, mettre à jour des listes de titres de transport, des programmes, etc. La liaison est, par exemple, une liaison filaire 5, le plus souvent un câble USB. Il peut également s'agir d'une communication sans contact (flèche en pointillés 5') entre le lecteur 4 et le valideur 2.

On cherche à éviter que les informations contenues dans le valideur 2 puissent être extraites par un lecteur pirate. On souhaite que cette lecture soit réservée à un opérateur autorisé.

Différents mécanismes logiciels (authentification par code, chiffrement des transactions, etc.) sont disponibles. Toutefois, ces mesures n'excluent pas des tentatives de piratage. De plus, dans le cas d'une connexion filaire, la prise USB est également susceptible d'être vandalisée.

Les figures 3A et 3B sont des vues respectivement en perspective et de dessous d'un mode de réalisation d'un valideur et de son système de fixation.

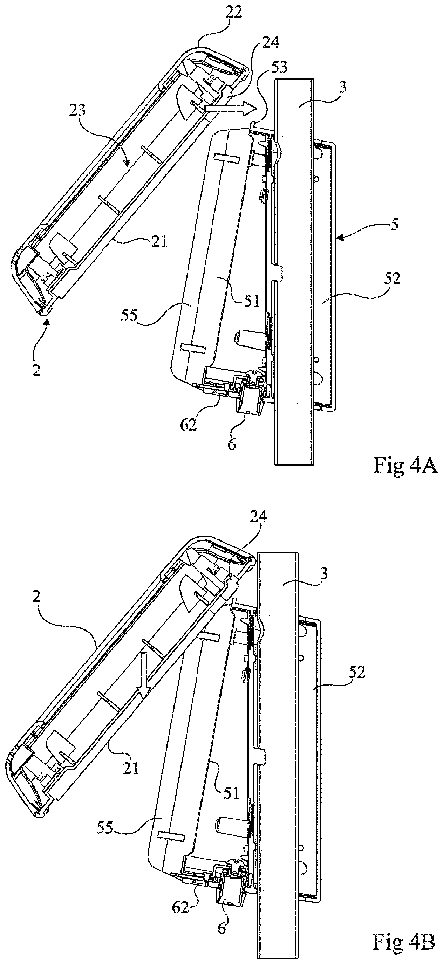

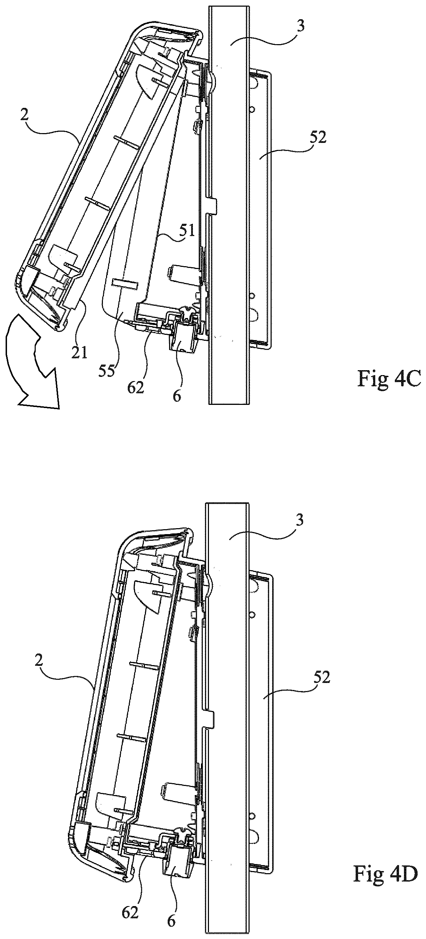

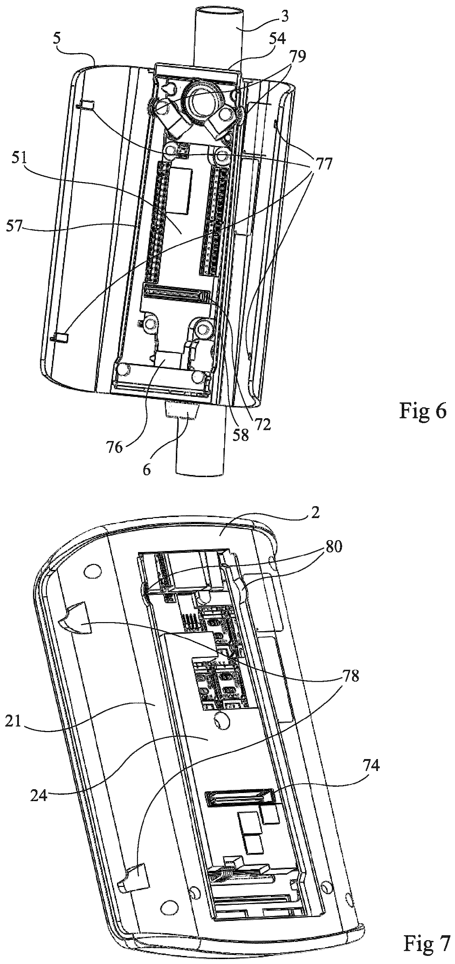

Le système comporte un support 5 destiné à recevoir le valideur 2 et à être fixé à demeure, dans cet exemple, à un poteau (non représenté). Dans l'exemple des figures 3A et 3B, le support 5 comporte un fourreau 52 destiné à entourer le poteau. Le montage du support 5 s'effectue soit lors de la fabrication du véhicule de transport en engageant le tube dans le fourreau, soit au moyen de brides (non représentées) vissées ou soudées. Le support ou châssis 5 comporte une platine 51 de réception d'une face arrière ou fond du valideur 2. La platine 51 définit, avec des joues latérales 55 du support, un berceau de réception du valideur 2. Le valideur 2 est rapporté sur le support 5 et y est accroché comme cela sera décrit en relation avec les figures 4. La platine est pourvue de connecteurs comme cela sera mieux compris par la suite en relation avec les figures 6 et 7.

Comme l'illustre la figure 3B, le dessous du support 5 porte, entre le fourreau 52 et le valideur 2, une serrure 6. Cette serrure 6 sert à verrouiller le valideur 2 sur son support 5 et à autoriser ou non un accès à une interface de communication avec un lecteur. Dans l'exemple de la figure 3B, on suppose une interface USB dont une prise est accessible au travers d'une lumière 62 ménagée dans le support 5.

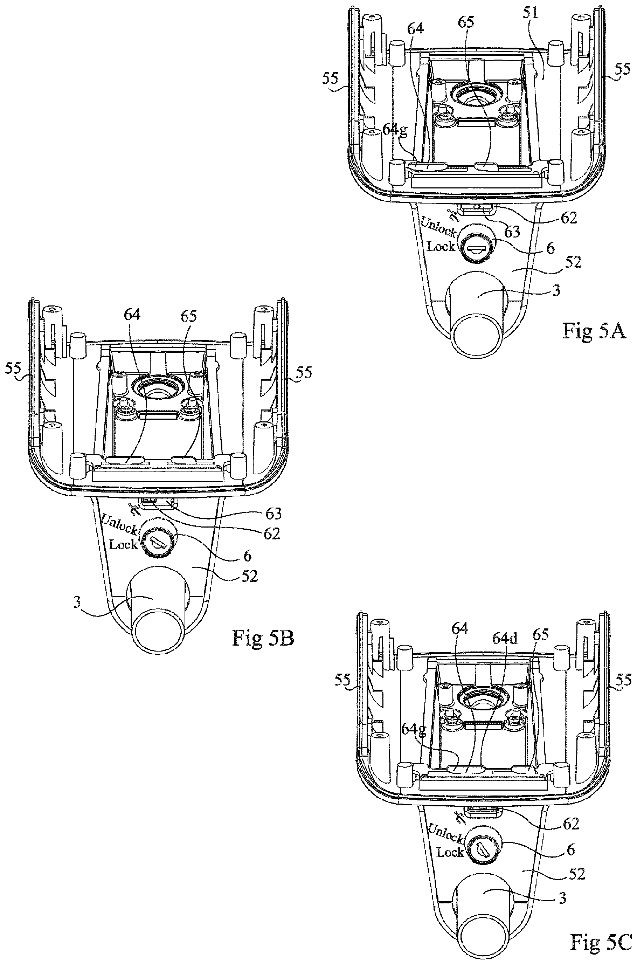

La serrure 6 commande, comme cela sera mieux compris en relation avec les figures 5A à 5C, l'obturation de la lumière 62 donnant accès à la prise USB. Cette prise USB est raccordée à un connecteur adapté à coopérer avec un connecteur du valideur 2 comme on le verra par la suite en relation avec les figures 6 et 7.

Les figures 4A, 4B, 4C et 4D illustrent un exemple de montage d'un valideur 2 sur un support 5.

Le boîtier du valideur 2 comporte, outre le fond 21, une coque 22 définissant, avec le fond 21, un logement 23 de réception des différents circuits et dispositifs internes au valideur (non représentés).

Le berceau, définit par la platine 51 et les joues 55 du support 5, est de préférence incliné par rapport à la verticale (dans l'orientation des figures). Cela confère au système une meilleure ergonomie pour l'utilisateur et laisse en outre un espace en partie inférieure pour loger la serrure 6 et la lumière 62.

Comme l'illustre la figure 4A, le montage du valideur 2 s'effectue en présentant celui-ci de façon inclinée et au-dessus du support de façon à accrocher sa partie supérieure au support à la manière d'une patère. Pour cela, un bec 53, saillant de la partie supérieure du support, coopère avec une lumière 24 ménagée dans le fond du valideur.

Comme l'illustre la figure 4B, les dimensions et positions notamment de la lumière 24 et du bec 53 sont telles que, lorsque le bord supérieur du valideur 2 est en contact avec le poteau 3 auquel est accroché le support 5, au-dessus de celui-ci, la lumière 34 se trouve à l'aplomb du bec 53. Les joues 55 servent à guider le positionnement latéral (horizontal) du valideur.

Comme l'illustre la figure 4C, le valideur 2 est ensuite abaissé pour être suspendu au support 5 puis est rabattu vers le support jusqu'à venir en butée sur la platine 51.

La position finale est illustrée par la figure 4D. Le valideur peut alors être verrouillé sur le support 5 à l'aide de la serrure 6.

Les figures 5A, 5B et 5C représentent le support 5 dépourvu du valideur pour illustrer le mécanisme de verrouillage et le fonctionnement de la serrure 6.

Cette serrure définit trois positions, respectivement entièrement verrouillée (LOCK), déverrouillée (UNLOCK) et, verrouillé mais connexion autorisée.

En figure 5A, la serrure 6 est dans une première position entièrement verrouillée dans laquelle le valideur est bloqué mécaniquement sur le support et l'accès à l'interface de connexion est interdite. Dans l'exemple mécanique de prise USB, la fente 62 est fermée par un volet 63 actionné par la serrure 6. Par ailleurs, une ou plusieurs pattes 64 et 65 de verrouillage, saillantes perpendiculairement de la platine 51, sont engagées dans une ou plusieurs lumières horizontales (non visibles aux figures 5) du fond 21 du valideur pour interdire un écartement de celui-ci de la platine 51. Les dimensions de ces lumières sont telles que le valideur ne peut pas être translaté vers le haut et reste donc accroché par le bec 53 et les pattes 64 et 65. Les pattes 64 et 65 ont, par exemple, des formes de L ou de T pour que leurs portions horizontales soient contenues dans le valideur en traversant les lumières de son fond par leurs portions verticales.

En figure 5B, on suppose que la serrure 6 est dans une deuxième position dans laquelle le valideur 2 peut être ôté de son support. Dans le mécanisme prévu aux figures, les pattes 64 et 65 sont dans une position où leurs portions horizontales sont à l'aplomb des lumières pour pouvoir libérer le fond du valideur. Les dimensions respectives des pattes et des lumières sont adaptées à cette fonctionnalité. Pour ce qui est de la lumière 62, le mouvement de la serrure vers la droite entre les figures 5A et 5B entraîne une ouverture partielle du volet 63. Cette ouverture n'est toutefois pas suffisante pour que la lumière 62 autorise le branchement d'une prise USB dans le contacteur.

La figure 5C illustre une troisième position dans laquelle la serrure 6 a été tournée dans sa position extrême vers la droite. Le volet 63 est alors escamoté dans le support et la lumière 62 est entièrement ouverte pour donner accès à la prise USB. Dans cette position, le valideur 2 est toutefois bloqué sur le châssis ou support 5. Pour cela, dans l'exemple représenté aux figures 5A à 5C, au moins une patte 64 a une forme en forme de T. En position de verrouillage complet (valideur et lumière) tel qu'illustré par la figure 5A, la portion horizontale de gauche 64g du T est utilisée. A l'inverse, en position illustrée par la figure 5C où la patte 64 est translatée vers la droite, la portion droite 64d est utilisée. La dimension de la lumière dans le fond 21 est supérieure à la longueur horizontale totale de la patte 64. En variante, plusieurs pattes en forme de L retourné ont leurs portions horizontales dirigées respectivement vers la droite et vers la gauche.

D'autres moyens mécaniques peuvent être prévus, pourvu de respecter une serrure à trois positions, dont une position d'accès à l'interface de données.

La figure 6 est une vue de face du support 5 accroché à un poteau 3.

La figure 7 est une vue arrière du valideur 2.

La platine 51 du support 5 comporte un ou plusieurs connecteurs 72 destinés à coopérer avec un ou plusieurs connecteurs correspondants 74 du fond du valideur. Le rôle d'au moins un connecteur est de reporter les signaux du valideur jusqu'à la prise USB dont l'arrière 76 est visible en figure 6.

D'autres connecteurs sont le cas échéant prévus et servent, par exemple, à alimenter le valideur ou à transmettre d'autres informations par exemple depuis le poste de conduite du véhicule de transport.

Les figures 6 et 7 illustrent également la présence de crochets 77 (par exemple au nombre de quatre) répartis sur les joues du support 5. Ces crochets sont destinés à coopérer à forme contraire avec des orifices 78 du fond du valideur.

De préférence, les différents connecteurs sont disposés entre deux nervures verticales 57 et 58 saillantes du fond du socle 5 en direction du valideur. Côté valideur, le fond 31 comporte une surépaisseur 25 qui se loge entre les nervures. Les nervures et la surépaisseur coopèrent pour assurer l'étanchéité. De plus, des chicanes sont définies dans les nervures et dans la surépaisseur en partie haute pour assurer l'étanchéité contre des projections depuis le dessus.

Un avantage des modes de réalisation qui ont été décrits est qu'une même clé d'actionnement de la serrure 6 sert à autoriser un décrochage du valideur ainsi qu'un accès aux données qu'il contient. De plus, le recours à une serrure mécanique pour ouvrir/autoriser l'accès aux données améliore la sécurité contre des tentatives de piratage.

Divers modes de réalisation ont été décrits. Diverses variantes et modifications apparaîtront à l'homme de l'art. En particulier, les différentes fonctions données aux éléments décrits peuvent être remplacées par des moyens équivalents. De plus, la mise en oeuvre pratique des modes de réalisation décrits et notamment la fabrication des différentes pièces par moulage de matière plastique est à la portée de l'homme du métier à partir des indications fonctionnelles données ci-dessus. Par ailleurs, bien que les modes de réalisation aient été décrits en relation avec un exemple d'application à une prise USB, d'autres connecteurs électriques peuvent être prévus. De plus, bien qu'un mode de réalisation préféré concerne l'obturation d'un connecteur physique au moyen de la serrure 6, la position donnant accès aux données du valideur peut provenir de l'actionnement d'un commutateur électromécanique par l'intermédiaire de la serrure 6, activant électriquement une interface de communication, par exemple en champ proche.

## Revendications

1. Système comportant : un valideur (2) de titres de transport (1) pourvu d'une interface de communication pour permettre à un lecteur d'extraire des données contenues dans le valideur ; un support (5) pourvu d'un mécanisme de fixation amovible du valideur sur le support (5), **caractérisé en ce que** le mécanisme comporte une serrure (6) à trois positions parmi lesquelles :
une première position dans laquelle le valideur est mécaniquement verrouillé sur le support et dans laquelle un accès (62) à ladite interface est interdite, verrouillant ainsi l'accès auxdites données ;
une deuxième position autorisant le décrochage du valideur du support ; et
une troisième position dans laquelle le valideur est mécaniquement verrouillé sur le support et dans laquelle l'accès à ladite interface est autorisée, déverrouillant ainsi l'accès auxdites données.

2. Système selon la revendication 1, dans lequel ledit accès aux données est une prise (62), ladite serrure (6) actionnant un volet (63) d'obturation de cette prise.

3. Système selon la revendication 2, dans lequel dans ladite troisième position, ledit volet (63) obture partiellement la prise.

4. Système selon l'une quelconque des revendications 1 à 3, dans lequel la serrure (6) commande des pattes (64, 65) saillantes du support (5) et adaptées à coopérer avec des lumières ménagées dans un fond (21) du valideur (2).

5. Système selon l'une quelconque des revendications 1 à 4, dans lequel un fond (51) du support est équipé d'au moins un connecteur électrique (72) adapté à coopérer avec un connecteur correspondant (74) d'un fond du valideur (2) pour reporter des signaux électriques vers ledit accès (62).

6. Système selon l'une quelconque des revendications 1 à 5, dans lequel le support (5) définit des moyens d'accrochage propre à coopérer avec le valideur (2).

7. Système selon la revendication 6, dans lequel le support comporte :
en partie supérieure, un bec (53), adapté à coopérer avec une lumière (24) ménagée dans le fond du valideur, le valideur étant accroché par sa partie supérieure au support à la manière d'une patère ; et
des joues latérales (55) pour guider le positionnement latéral du valideur.

8. Système selon la revendication 7, dans lequel lesdits moyens comportent des éléments (53, 77) saillants du support, aptes à coopérer avec des lumières (24) ou orifices (79) ménagés dans le valideur.

9. Support selon l'une quelconque des revendications 1 à 8 pour valideur de titres de transports.

## Patentansprüche

1. Ein System, das Folgendes aufweist:
einen Entwerter (2) für Fahrkarten (1), der eine Kommunikationsschnittstelle aufweist, die es einem Leser ermöglicht, Daten, die in dem Entwerter enthalten sind, zu entnehmen;
einen Träger (5), der ausgestattet ist mit einem Mechanismus zum abnehmbaren Befestigen des Entwerters an dem Träger (5), **dadurch gekennzeichnet, dass** der Mechanismus einen Verschluss (6) mit drei Positionen aufweist, mit:
einer ersten Position, in der der Entwerter mechanisch an dem Träger verriegelt ist und wo der Zugriff (62) zu der Schnittstelle verboten ist, und damit den Zugriff zu den Daten sperrt;
einer zweiten Position, die es ermöglicht, den Entwerter von dem Träger zu entnehmen; und
einer dritten Position, in der der Entwerter mechanisch an dem Träger verriegelt ist und in der der Zugriff zu der Schnittstelle erlaubt ist, und damit der Zugriff zu den Daten entriegelt.

2. System nach Anspruch 1, wobei der Zugriff zu den Daten eine Buchse (62) ist, und der Verschluss (6) eine Verschlussklappe (63) zum Schließen der Buchse auslöst.

3. System nach Anspruch 2, wobei in der dritten Position die Verschlussklappe (63) die Buchse teilweise schließt.

4. System nach einem der Ansprüche 1 bis 3, wobei der Verschluss (6) Nasen (64, 65) steuert, die von dem Träger (5) herausragen und in der Lage sind, mit Anschlüssen, die in einer Rückwand (21) des Entwerters (2) ausgebildet sind, zu kooperieren.

5. System nach einem der Ansprüche 1 bis 4, wobei eine Rückwand (51) des Trägers mit wenigstens einem elektrischen Verbinder (72) ausgestattet ist, der in der Lage ist, mit einem entsprechenden Verbinder (74) einer Rückwand des Entwerters (2) zu kooperieren, um elektrische Signale zu dem Zugriff (62) zu übermitteln.

6. System nach einem der Ansprüche 1 bis 5, wobei der Träger (5) Hakenmittel definiert, die in der Lage sind, mit dem Entwerter (2) zu kooperieren.

7. System nach Anspruch 6, wobei der Träger Folgendes aufweist:
in seinem oberen Teil, einen Sporn oder Vorsprung (53), der in der Lage ist, mit einem Anschluss (24), der in der Rückwand des Entwerters ausgebildet ist, zu kooperieren, wobei der Entwerter mit seinem oberen Teil an dem Träger wie an einem Haken aufgehängt ist; und
seitliche Flansche (55) zum Führen der seitlichen Positionierung des Entwerters.

8. System nach Anspruch 7, wobei die Mittel Elemente (53, 77) aufweisen, die von dem Träger herausragen und in der Lage sind, mit Anschlüssen (24) oder Öffnungen (79), die in dem Entwerter ausgebildet sind, zu kooperieren.

9. Der Träger von einem der Ansprüche 1 bis 8 für einen Fahrkartenentwerter.

## Claims

1. A system comprising: a validator (2) of fare tickets (1) provided with a communication interface to enable a reader to extract data contained in the validator; a support (5) provided with a mechanism for removably fastening the validator to the support (5), **characterized in that** the mechanism comprises a lock (6) having three positions, among which:
a first position where the validator is mechanically locked on the support and where the access (62) to said interface is forbidden, thus locking the access to said data;
a second position enabling to unhook the validator from the support; and
a third position where the validator is mechanically locked on the support and where the access to said interface is allowed, thus unlocking the access to said data.

2. The system of claim 1, wherein said access to the data is a socket (62), said lock (6) actuating a shutter (63) for closing the socket.

3. The system of claim 2, wherein in said third position, said shutter (63) partially closes the socket.

4. The system of any of claims 1 to 3, wherein the lock (6) controls tabs (64, 65) protruding from the support (5) and capable of cooperating with ports formed in a back wall (21) of the validator (2).

5. The system of any of claims 1 to 4, wherein a back wall (51) of the support is equipped with at least one electric connector (72) capable of cooperating with a corresponding connector (74) of a back wall of the validator (2) to transfer electric signals to said access (62).

6. The system of any of claims 1 to 5, wherein the support (5) defines hooking means capable of cooperating with the validator (2).

7. The system of claim 6, wherein the support comprises:
in its upper portion, a spur (53) capable of cooperating with a port (24) formed in the back wall of the validator, the validator being hung by its upper portion to the support as on a hook; and
lateral flanges (55) for guiding the lateral positioning of the validator.

8. The system of claim 7, wherein said means comprise elements (53, 77) protruding from the support, capable of cooperating with ports (24) or orifices (79) formed in the validator.

9. The support of any of claims 1 to 8, for a fare ticket validator.
